# NOUVEAU FASCICULE DE BREVET EUROPEEN

(11) **EP 0 588 769 B2**
(45) Date de publication et mention de la décision concernant l'opposition: **23.03.2005**
(45) Mention de la délivrance du brevet: 05.03.1997
(21) Numéro de dépôt: 93810640.8
(22) Date de dépôt: 09.09.1993
(51) Int. Cl.: F16H 1/28, F16H 1/46

(54) **Réducteur à planétaire**
Planeten-Untersetzungsgetrieb
Planetary reduction gearing

(30) Priorité: 16.09.1992 FR 9211034
(43) Date de publication de la demande: 23.03.1994
(73) Titulaire: SOMFY SAS, 74300 Cluses (FR)
(72) Inventeur: Lagarde, Eric Paul, F-74700 Sallanches (FR)
(74) Mandataire: Grosfillier, Philippe

(56) Documents cités:
- DE-B- 1 159 718
- GB-A- 1 073 535
- Extrait de Brevet Russe ( DERWENT ) & SU-A-174481 ( DRUZHININ )
- EUREKA TRANSFERS TECHNOLOGY no. 7 , 11 Juin 1991 , HORTON KIRBY, KENT, GB page 7 DAVALL 'Sliding Planet Gears provide optimum Load Sharing'
- Katalog "Antriebstechnik" der Fa. Heynau
- 8 Blatt techn. Zeichnungen der Fa.Heynau
- Mathematische Auswertung (Computerblatt)

## Description

La présente invention a pour objet un réducteur à planétaire comprenant au moins un étage comprenant un pignon planétaire d'entrée, des satellites montés flottant radialement sur un porte-satellites solidaire d'un arbre de sortie et une couronne fixe.

Des réducteurs à planétaires, généralement à deux ou trois étages, sont notamment utilisés dans les moteurs tubulaires destinés à l'entraînement de stores, volets roulants ou portes. En raison des jeux nécessaires qu'ils présentent, ces réducteurs sont relativement bruyants.

On connaît du brevet GB 1 073 535 un engrenage à planétaire dans lequel les satellites sont montés flottant radialement sur le porte-satellites. Cette construction a pour but d'assurer que les satellites s'ajustent d'eux-mêmes aux flancs des dents de la couronne et du pignon planétaire. Un engrenage du même type est également décrit dans la revue "EUREKA TRANSFERS TECHNOLOGY" N° 7 du 11 juin 1991, page 7. Le montage flottant des satellites a ici pour but d'assurer une répartition optimale de la charge entre le planétaire et la couronne et un alignement idéal des dents.

Du brevet SU 174 481, on connaît en outre un réducteur à planétaire dans lequel l'angle d'engrènement entre le planétaire et les satellites est inférieur à l'angle d'engrènement entre la couronne et les satellites dans le but de limiter la charge sur le porte-satellites.

Ces différentes mesures apportent certes des avantages, mais ne réduisent pas le bruit. D'autre part, la capacité de charge des dentures de ces réducteurs n'est pas optimisée.

Pour parvenir à réduire le bruit ou augmenter la capacité de charge de réducteurs à planétaires, il est connu d'augmenter le rapport de conduite des éléments engrenants en réduisant les jeux de fonctionnement. Cette solution a l'inconvénient d'être coûteuse, en raison de la qualité et de la précision qu'elle nécessite. En effet, il faut que la géométrie et les dimensions des pièces constitutives soient très précises, car les entre-axes, dans ce type de réducteur, sont petits et les axes sont situés sur des supports indépendants les uns des autres. Cette technique a enfin des limites, car un jeu minimum est indispensable pour absorber les dilatations dues aux échauffements. En outre, les pièces constitutives du réducteur étant généralement fabriquées par moulage, un jeu est nécessaire pour absorber le retrait après moulage qui se produit au bout d'un certain temps. Pour y remédier, il faut procéder à un traitement thermique destiné à accélérer ce retrait. Il convient également de tenir compte du fait qu'il est devenu usuel de fabriquer de tels réducteurs en matière plastique et il faut alors tenir compte des gonflements de reprise d'humidité.

Dans le même but il est connu d'utiliser des transmissions à denture hélicoïdale, mais les inconvénients de telles transmissions sont bien connus. Ce sont la génération d'une composante axiale qu'il faut absorber, la génération de forces de frottement préjudiciables au rendement et une fabriction plus délicate et plus coûteuse.

L'invention vise, d'une part, à réduire le bruit et, d'autre part, à augmenter la capacité de charge du réducteur par des moyens simples, peu coûteux et faciles à maîtriser.

Dans le réducteur selon l'invention, tel que défini par la revendication 1, les satellites sont naturellement plaqués soit contre le planétaire, soit contre la couronne et les rapports de conduite entre les éléments concernés ont une valeure maximale.

Le bruit étant généré essentiellement entre le planétaire et les satellites du premier étage de ce type de réducteur, le bruit peut être fortement diminué en dirigeant la résultante radiale vers le planétaire.

En dirigeant la résultante radiale vers l'élément le plus fragile, on augmente la capacité de charge du réducteur.

Il n'est pas nécessaire de faire appel à une grande précision de réalisation et les jeux de fonctionnement peuvent être notablement limités, étant donné que les satellites sont flottants. Des engrenages à dentures droites peuvent être utilisés. Le même porte-satellites peut recevoir des satellites différents, ce qui permet de réaliser plusieurs rapports de réducteur, c'est-à-dire plusieurs réducteurs.

Si le réducteur comporte plusieurs étages, il sera généralement judicieux que la résultante radiale soit dirigée vers le planétaire pour le premier étage, le bruit provenant principalement du premier étage tournant à vitesse élevée et vers l'élément le plus fragile, planétaire ou couronne, pour au moins le dernier étage, la capacité de transmission de couple étant limitée par celle du dernier étage. Cette mesure permet à la fois de réduire le bruit et d'augmenter la capacité de transmission du réducteur.

Selon une forme d'exécution avantageuse de l'invention, le porte-satellites est en forme de barillet comprenant deux flasques dont les faces en regard sont traversées par des raiunures radiales dans lesquels les axes des satellites peuvent coulisser librement. Un tel porte-satellites peut être obtenu de moulage,sans reprise.

Le dessin annexé représente, à titre d'exemple, une forme d'exécution de l'invention, ainsi qu'une variante de celle-ci.
La figure 1 est une vue en coupe axiale, selon I-I de la figure 2, d'un réducteur à planétaire à trois étages, associé à moteur électrique tubulaire.
La figure 2 est une vue en coupe transversale selon II-II de la figure 1.
La figure 3 représente les angles de pression de fonctionnement et les force de pression dans le premier étage du récuteur.
La figure 4 représente les angles de pression de fonctionnement et les forces de pression dans le dernier étage du réducteur.

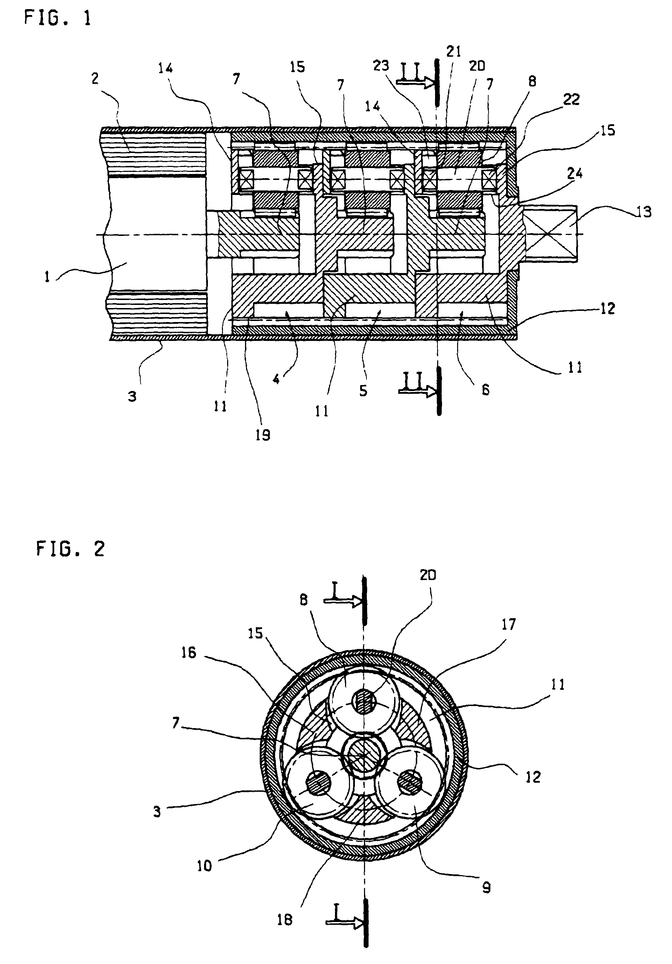

Aux figures 1 et 2, on distingue partiellement un moteur tubulaire comprenant un rotor 1 tournant dans un stator 2 fixé à l'intérieur d'un tube cylindrique 3. Dans ce tube 3 est également monté un réducteur à planétaire à trois étages 4, 5, 6. chacun de ces étages comprend un planétaire 7 autour duquel tournent trois satellites 8, 9, 10 montés dans un porte-satellites 11 et engrenant avec une couronne 12 tubulaire et commune aux trois étages. Cette couronne 12 est fixée au tube 3. Le planétaire 7 du premier étage 4 est constitué par un prolongement du rotor 1, tandis que les planétaires 7 des étages suivants 5 et 6 font partie du porte-satellites 11 de l'étage précédent. Le porte-satellites 11 du troisième étage 6 présente un prolongement 13 constituant l'axe de sortie du réducteur.

Chacun des portes-satellites 11 est en forme de barillet se présentant sous la forme de deux plateaux circulaires parallèles 14 et 15 reliés par des entretoises 16, 17, 18 définissant trois logement dans lesquels sont respectivement logés les trois satellites 8, 9, 10. Le porte-satellites 11 présente une portée circulaire 19 coopérant avec le sommet des dents de la denture de la couronne 12 pour centrer approximativement le porte-satellites dans la couronne 12 lors du montage du réducteur afin de faciliter le montage du porte-satellites dans la couronne.

Les satellites 8, 9, 10, de préférence en matière synthétique, de même que la couronne 12, sont montés chacun libre en rotation sur un axe 20 dont les extrémités 21 et 22 présentent des faces planes parallèles par lesquelles l'axe 20 est engagé dans deux rainures radiales 23 et 24 pratiquées dans chacun des plateaux 14 et 15 du porte-satellites, ces rainures débouchant aussi bien vers l'intérieur que vers l'extérieur des plateaux 14 et 15. Les axes 20 peuvent coulisser librement dans ces rainures, de telle sorte que les satellites 8, 9, 10 sont montés flottant radialement dans leur porte-satellites, les axes 20 des satellites étant toutefois empêchés de tourner de telle sorte que la rotation des satellites se fait entre les satellites et leurs axes.

Les dentures des éléments engrenant du réducteur, c'est-à-dire des planétaires, des satellites et de la couronne sont déportées de telle sorte que pour chacun des satellites, la résultante radiale des forces exercées, d'une part, entre la couronne 12 et le satellite et, d'autre part, entre le satellite et le planétaire 7, soit dirigée vers le planétaire pour le premier étage, qui tourne plus rapidement, et vers l'élément engrenant le plus fragile, en l'occurrence la couronne 12, pour le troisième étage. En ce qui concerne le deuxième étage, ladite résultante pourrait être dirigée soit vers le planétaire, soit vers l'élément engrenant le plus fragile, planétaire ou couronne, selon la priorité donnée à la diminution du bruit ou à l'augmentation de la charge, le fait d'avoir des satellites flottants et une résultante dirigée vers le planétaire ayant pour effet de diminuer le bruit du réducteur, alors que la résultante dirigée vers l'élément engrenant le plus fragile, en l'occurrence la couronne, permet d'augmenter la charge, c'est-à-dire la capacité de transmission du réducteur. Ainsi, les satellites du premier étage 4 sont naturellement plaqués contre le planétaire. Le bruit étant généré essentiellement entre le planétaire et les satellites du premier étage tournant rapidement, il est diminué par la suppression du jeu.

Les satellites du dernier étage 6 sont par contre plaqués contre la couronne 12 et les angles de conduite entre les satellites et la couronne ont une valeur maximale ce qui permet d'augmenter la capacité de transmission, c'est-à-dire la charge sur l'axe de sortie 13.

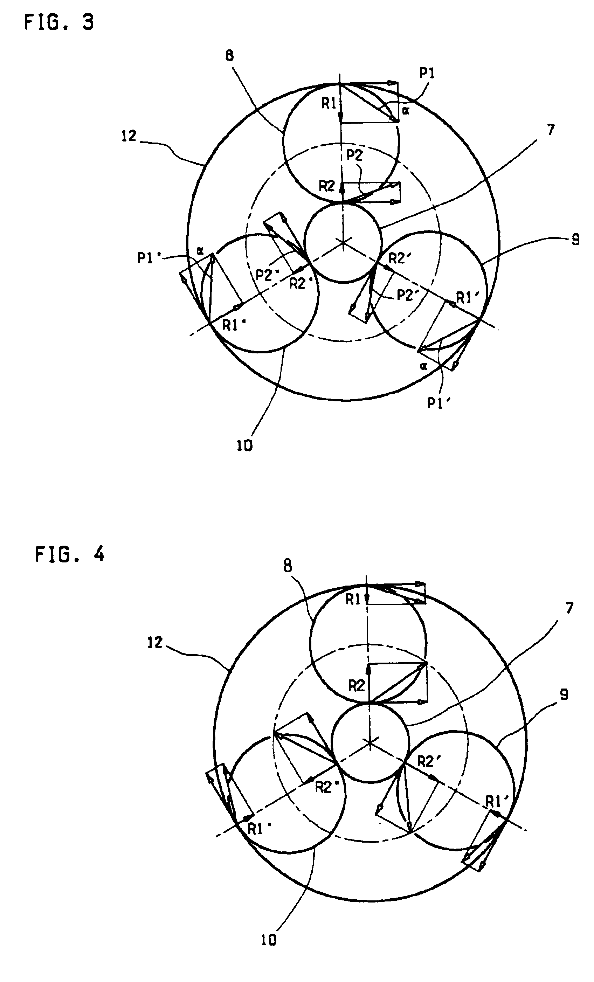

La figure 3 représente les angles de pression de fonctionnement α et les forces P engendrées par la pression de fonctionnement des dentures les unes dans les autres, pour le premier étage 4. Au sujet des dentures déportées et de l'angle de pression de fonctionnement α on se rapportera par exemple à G. HENRIOT, TRAITE THEORIQUE ET PRATIQUE DES ENGRENAGES et on rappellera que l'angle de pression de fonctionnement α croît si la somme des déports des éléments engrenants est positif et décroît si le déport négatif. Comme on le voit à la figure 3, l'angle α détermine la direction des forces de pression de fonctionnement P1, P1', P1'' entre les satellites et la couronne et P2, P2' et P2" entre les satellites et le planétaire.

Dans le cas de la figure 3, les dentures sont déportées de telle manière, que pour chacun des satellites, la composante radiale R1 de la force P1 est supérieure à la composante R2 de la force P2 c'est-à-dire que la résultante de R1 et R2 est dirigée vers le planétaire 7. De même, R1' est supérieur à R2' et R1'' est supérieur à R2".

Ce résultat peut bien entendu être obtenu en déportant toutes les dentures ou une partie de ces dentures seulement.

La figure 4 illustre les angles de pression de fonctionnement et les composantes radiales dans le dernier étage du réducteur. On admet toujours que la couronne 12 constitue l'élément le plus fragile. Dans ce cas, on a R2 supérieur R1, R1' supérieur à R2', R2" supérieur à R1", de telle sorte que les satellites flottants 8, 9, 10 sont pressés contre la denture de la couronne 12.

Selon une variante d'exécution du porte-satellites, l'axe 20, au lieu d'être maintenu axialement par des rainures, pourrait traverser les deux plateaux 14 et 15 du porte-satellites à travers deux lumières radiales et être maintenu axialement au moyen de circlips.

L'invention est applicable à un réducteur comportant un seul étage ou un nombre d'étages différent de trois. Dans le cas d'un réducteur à un seul étage, cet étage sera considéré soit comme un premier étage soit comme un dernier étage selon le résultat considéré comme prioritaire.

Dans le cadre d'un réducteur à plusieurs étages, les étages intermédiaires pourront être réalisés soit comme le premier étage, soit comme le dernier étage selon le résultat considéré comme prioritaire.

## Revendications

1. Réducteur à planétaire comprenant au moins un étage comprenant un pignon planétaire d'entrée (7), des satellites (8, 9, 10) montés flottant radialement sur un porte-satellites (11) solidaire d'un arbre de sortie (13) et une couronne fixe (12), **caractérisé en ce que** les dentures des éléments engrenant sont déportées de telle sorte que l'angle de pression de fonctionnement entre un satellite et la couronne fixe est soit inférieur à l'angle de pression de fonctionnement entre ce satellite et le planétaire d'entrée, pour tous les satellites d'un même étage, soit supérieur à l'angle de pression de fonctionnement entre ce satellite et le planétaire d'entrée, pour tous les satellites d'un même étage; de telle sorte que la résultante radiale de la force exercée par le planétaire sur un satellite et de la réaction exercée par la couronne fixe sur ce satellite est dirigée vers le planétaire de manière à réduire le bruit du réducteur ou vers l'engrènement le plus fragile de manière à augmenter la capacité de charge du réducteur.

2. Réducteur selon la revendication 1, comprenant plusieurs étages (4, 5, 6) comportant chacun un planétaire et un jeu de satellites (8, 9, 10), **caractérisé en ce que** dans au moins le premier étage les dentures des éléments engrenant sont déportées de manière que ladite résultante est dirigée vers le planétaire et que, dans au moins le dernier étage, les dentures des éléments engrenant sont déportées de telle sorte que ladite résultante est dirigée vers l'engrènement le plus fragile.

3. Réducteur selon la revendication 1 ou 2, **caractérisé en ce que** le porte-satellites (11) est en forme de barillet comprenant deux flasques (14, 15) dont les faces en regard sont traversées par des rainures radiales (23, 24) dans lesquels les axes (20) des satellites peuvent coulisser librement.

4. Réducteur selon la revendication 3, **caractérisé en ce que** les axes (20) des satellites présentent, au moins à l'une de leurs extrémités, des méplats (21) coopérant avec les flancs de la rainure (23) pour empêcher les axes de tourner avec les satellites.

5. Réducteur selon l'une quelconque des revendications 1 à 4, **caractérisé en ce que** les porte-satellites présentent une portée cylindrique (19) de centrage dans la couronne (12).

## Patentansprüche

1. Planeten-Untersetzungsgetriebe mit wenigstens einer Stufe, welche ein Eingangs-Sonnenrad (7), Planetenräder (8, 9 10), die radial frei beweglich auf einem Planetenradträger (11) montiert sind, welcher fest an einer Ausgangswelle (13) angebracht ist, und ein festes Hohlrad (12)aufweist, **dadurch gekennzeichnet, dass** die Verzahnungen der im Eingriff miteinander befindlichen Elemente derart profilverschoben sind, dass der Betriebsdruckwinkel zwischen einem Planetenrad und dem festen Hohlrad für alle Planetenräder ein und derselben Stufe entweder kleiner als der Betriebsdruckwinkel zwischen diesem Planetenrad und dem Eingangssonnenrad oder grösser als der Betriebsdruckwinkel zwischen diesem Planetenrad und dem Eingangssonnenrad ist, derart, dass die radiale Resultierende der vom Sonnenrad auf ein Planetenrad ausgeübten Kraft und der vom festen Hohlrad auf dieses Planetenrad ausgeübten Reaktionskraft auf das Sonnenrad gerichtet ist, um das Geräusch des Untersetzungsgetriebes zu verringern, oder auf den mechanisch schwächsten Zahneingriff gerichtet ist, um die Belastungskapazität des Untersetzungsgetriebes zu erhöhen.

2. Untersetzungsgetriebe nach Anspruch 1, mit mehreren Stufen (4, 5, 6), von denen jede ein Sonnenrad und eine Gruppe von Planetenrädern (8, 9, 10) aufweist, **dadurch gekennzeichnet, dass** in wenigstens der ersten Stufe die Verzahnungen der miteinander im Eingriff befindlichen Elemente derart profilverschoben sind, dass die erwähnte Resultierende auf das Sonnenrad gerichtet ist, und dass in wenigstens der letzten Stufe die Verzahnungen der im Eingriff miteinander befindlichen Elemente derart profilverschoben sind, dass die erwähnte Resultierende auf den mechanisch schwächsten Zahneingriff gerichtet ist.

3. Untersetzungsgetriebe nach Anspruch 1 oder 2, **dadurch gekennzeichnet, dass** der Planetenradträger (11) tonnenförmig ausgebildet ist und zwei Flansche (14, 15) aufweist, deren gegenüberliegende Seiten von radialen Nuten (23, 24) durchquert werden, in denen die Achsen (20) der Planetenräder frei verschiebbar sind.

4. Untersetzungsgetriebe nach Anspruch 3, **dadurch gekennzeichnet, dass** die Achsen (20) der Planetenräder wenigstens an einem ihrer Enden Abflachungen (21) aufweisen, welche mit den Flanken der Nut (23) zusammenwirken, um zu verhindern, dass sich die Achsen mit den Planetenrädern drehen.

5. Untersetzungsgetriebe nach einem der Ansprüche 1 bis 4, **dadurch gekennzeichnet, dass** die Planetenradträger zur Zentrierung im Hohlrad (12) eine zylindrische Lagerfläche aufweisen.

## Claims

1. A planetary reduction gear comprising at least one stage comprising an input planet pinion (7), spider gears (8, 9, 10) mounted so that they can float radially on a spider (11) secured to an output shaft (13) and a fixed crown wheel (12), **characterized in that** the toothings of the meshing elements are offset in such a way that the operating pressure angle between a spider gear and the fixed crown wheel is either smaller than the operating pressure angle between this spider gear and the input planet pinion for all spider gears of one and the same stage, or greater than the operating pressure angle between this spider gear and the input planet gear for all spider gears of one and the same stage, in such a way that the radial resultant of the force exerted by the planet pinion on a spider gear and of the reaction exerted by the fixed crown wheel on this spider gear points towards the planet pinion so as to reduce the noise of the reduction gear or towards the weakest meshing in order to increase the load capability of the reduction gear.

2. The reduction gear as claimed in claim 1, comprising several stages (4, 5, 6) each one including a planet pinion and a set of spider gears (8, 9, 10), **characterized in that** in at least the first stage the toothings of the meshing elements are offset so that said resultant points towards the planet pinion and so that, in at least the last stage, the toothings of the meshing elements are offset such that said resultant points towards the weakest meshing.

3. The reduction gear as claimed in claim 1 or 2, **characterized in that** the spider (11) is in the form of a barrel comprising two flanges (14, 15), the opposite faces of which are traversed by radial grooves (23, 24) in which the spindles (20) of the spider gears may slide freely.

4. The reduction gear as claimed in claim 3, **characterized in that** the spindles (20) of the spider gears have, at least at one of their ends, flats (21) which interact with the flanks of the groove (23) to prevent the spindles from rotating with the spider gears.

5. The reduction gear as claimed in any one of the claims 1 to 4, **characterized in that** the spiders have a cylindrical bearing surface (19) for centering in the crown wheel ( 12).
